# EUROPEAN PATENT APPLICATION

(11) **EP 4 614 759 A1**
(43) Date of publication of application: **10.09.2025**
(21) Application number: 24866583.8
(22) Date of filing: 04.09.2024
(51) Int. Cl.: H02J 7/00

(54) **CHARGING DEVICE AND OPERATION METHOD THEREFOR**

(30) Priority: 24.01.2024 US 202463624549 P
(71) Applicant: Delta Electronics Inc., Taoyuan City 320023 (TW)
(72) Inventor: HUANG, Wei-te, Taoyuan City, 320023 Taiwan (TW)
(74) Representative: 2K Patentanwälte Blasberg Kewitz & Reichel
(86) International application number: PCT/CN2024/116800
(87) International publication number: WO 2025/156643

(57) **Abstract**

A charging device (100) includes a connection device (1) and a power device (2). The connection device (1) includes a power wire (12), a control guide wire (14), and a connection guide wire (16). The power device (2) includes a conversion circuit (22), an auxiliary circuit, and a controller (26). The conversion circuit (22) converts a signal source (Sp) of the connection guide wire (16) into a first working power source (Pw1). The auxiliary power circuit (24) converts a power source (P) provided by an electric vehicle (200) to the power wire (12) into a second working power source (Pw2). When the controller (26) is disabled and the electric vehicle (200) is coupled to the connection device (1), the controller (26) is activated according to the first working power source (Pw1), and sets an operating mode to be current executed to a discharging mode. When operating in the discharging mode and receiving the second working power source (Pw2), the controller (26) changes a power acquisition source from the first working power source (Pw1) to the second working power source (Pw2).

## Description

### Cross-reference to related applications

This disclosure claims the priority of U.S. Patent Application No. 63/624,549, entitled "CHARGING DEVICE AND METHOD OF OPERATING SAME," filed with the U.S. Patent Office on January 24, 2024, the entire contents of which are incorporated herein by reference

### BACKGROUND

### Technical Field

The present disclosure relates to a charging device and a method of operating the same, and more particularly to a charging device capable of controlling the discharge of an electric vehicle and a method of operating the same.

### Description of Related Art

The statements in this section merely provide background information related to the present disclosure and do not necessarily constitute prior art.

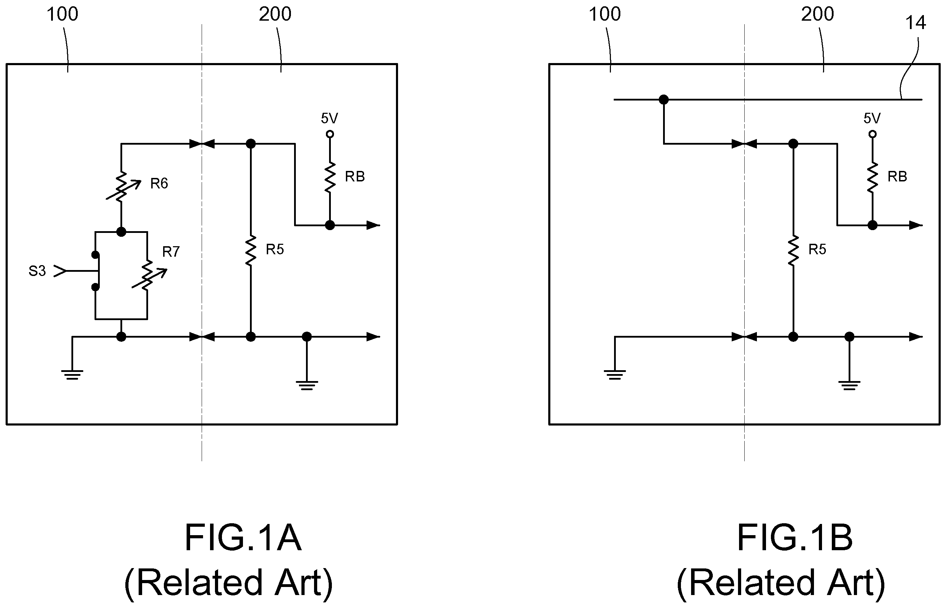

In FIG. 1A and FIG. 1B, internal circuit diagrams of a conventional electric vehicle charging device applied to V2X (vehicle to everything) are shown. The discharging mode of V2X generally refers to the discharging mode which may include vehicle to load V2L, vehicle to home V2H, vehicle to grid V2G, vehicle to vehicle V2V, and other discharging modes. Specifically, the discharging mode of the vehicle to load V2L is mainly that one terminal of the charging device 100 may be coupled to the power socket, and the other terminal may be coupled to the electric vehicle 200. The electric vehicle 200 can provide AC power to the power socket through the charging device 100, and the power socket may include a power output port such as a socket and a USB port to supply power to a load coupled to the power socket. The discharging modes of the vehicle to home V2H and vehicle to grid V2G are mainly that one terminal of the charging device 100 may be coupled to an emergency power supply socket or a mains, and the other terminal is coupled to the electric vehicle 200. When the household AC power fails, the electric vehicle 200 can provide AC power to the emergency power supply socket or the mains through the charging device 100 to provide emergency AC backup power. The V2V discharging mode is mainly that one terminal of the charging device 100 may be coupled to the electric vehicle 200 that provides power, and the other terminal can be coupled to the electric vehicle 200 that receives power. The electric vehicle 200 providing power can provide AC power to the electric vehicle 200 receiving power through the charging device 100 so as to provide backup power to the electric vehicle 200 receiving power.

In general, in the above-mentioned V2X discharging mode, there is no wake-up function inside the charging device 100 so that in the discharging mode operation in which the electric vehicle 200 discharges the charging device 100, the controller inside the charging device 100 cannot be awakened. Therefore, the V2X discharging mode often requires a switch S3 to be actuated to allow the current to flow through different resistors R6, R7 (as shown in FIG. 1A), or to be directly short-circuited to the control guide wire 14 (or called control pilot wire, as shown in FIG. 1B). However, both of the above methods cannot timely adjust the discharge current provided by the electric vehicle 200, and do not have the functions of ground protection, overcurrent protection, overvoltage protection, and leakage current detection protection.

Therefore, how to design a charging device and a method of operating the same so that the controller can be activated without using additional external power when the controller is disabled has become a critical topic in this field.

### SUMMARY

In order to solve the above-mentioned problems, the present disclosure is to provide a charging device. The charging device includes a connection device, and the connection device includes a power wire, a control guide wire, and a connection guide wire, and a first terminal of the power wire, a first terminal of the control guide wire, and a first terminal of the connection guide wire are coupled to an electric vehicle. The charging device further includes a power device. The power device is coupled to a second terminal of the power wire, a second terminal of the control guide wire, and a second terminal of the connection guide wire. The power device includes a conversion circuit, an auxiliary power circuit, and a controller. The conversion circuit is coupled to the connection guide wire, and converts a signal source of the connection guide wire into a first working power source. The auxiliary power circuit is coupled to the power wire, and converts a power source provided by the electric vehicle to the power wire into a second working power source. The controller is coupled to the conversion circuit and the auxiliary power circuit. When the controller is disabled and the electric vehicle is coupled to the connection device, the controller is activated according to the first working power source, and sets an operating mode to be current executed to a discharging mode. When the controller operates in the discharging mode and receives the second working power source, the controller changes a power acquisition source from the first working power source to the second working power source.

In order to solve the above-mentioned problems, the present disclosure is to provide a method of operating a charging device. The charging device includes a connection device and a power device. The connection device includes a power wire, a control guide wire, and a connection guide wire. The power device includes a switch, a conversion circuit, and an auxiliary power circuit. The method includes steps of: (a) converting, by the conversion circuit, a signal source on the connection guide wire into a first working power source according to an electric vehicle coupled to the connection device when the power device is disabled; (b) setting an operating mode to be current executed to a discharging mode according to the first working power source, and communicating with the electric vehicle through the control guide wire by handshaking to receive a power source provided by the electric vehicle to the power wire; (c) converting, by the auxiliary power circuit, the power source into a second working power source; (d) changing a power acquisition source from the first working power source to the second working power source when the second working power source is received.

The main purpose and effect of the present disclosure is that, when the controller is disabled and the electric vehicle is coupled to the connection device, the controller is activated by using the power acquired by connecting the electric vehicle to the connection device so that subsequent operations can be performed after the controller is activated. Furthermore, since such a power supply activation does not require the use of additional external power to supply power to the controller, it can achieve the effect of reducing the configuration cost of external power and reducing the size of the device.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1A is a schematic diagram of an internal circuit of a conventional electric vehicle charging device applied to V2X.
FIG. 1B is a schematic diagram of the internal circuit of another conventional electric vehicle charging device applied to V2X.
FIG. 2 is a schematic diagram of an internal circuit of a charging device of the present disclosure applied to a first embodiment of V2X.
FIG. 3 is a schematic diagram of the internal circuit of the charging device of the present disclosure applied to a second embodiment of V2X.
FIG. 4A is a schematic diagram of a first operation step of the charging device of the present disclosure applied to V2X.
FIG. 4B is a schematic diagram of a second operation step of the charging device of the present disclosure applied to V2X.
FIG. 4C is a schematic diagram of a third operation step of the charging device of the present disclosure applied to V2X.
FIG. 4D is a schematic diagram of a fourth operation step of the charging device of the present disclosure applied to V2X.
FIG. 5 is a flowchart of a method of operating the charging device according to the present disclosure.

### Description of Reference Numerals in Drawings

100: charging device
1: connection device
12: power wire
L: live wire
N: neutral wire
PE: ground wire
14: control guide wire
16: connection guide wire
18: trigger circuit
R6, R7: resistor
S3: trigger switch
2: power device
2A: first terminal
2B: second terminal
22: conversion circuit
24: auxiliary power circuit
26: controller
SW: switch
32: detection module
320: voltage detection circuit
322: current detection circuit
324: ground detection circuit
326: welding detection circuit
328: leakage detection circuit
329: temperature detection circuit
34: first control guide module
36: second control guide module
Dr: driving circuit
Fuse: fuse
200: electric vehicle
300: load
P: power source
Sp: signal source
Pw1: first working power source
Pw2: second working power source
Ps: power parameter
Sv: voltage signal
Si: current signal
Sm: impedance signal
Se: welding signal
Sr: leakage signal
St: temperature signal
PWM: pulse-width modulation signal
S100-S400: steps

### DETAILED DESCRIPTION

Reference will now be made to the drawing figures to describe the present disclosure in detail. It will be understood that the drawing figures and exemplified embodiments of present disclosure are not limited to the details thereof.

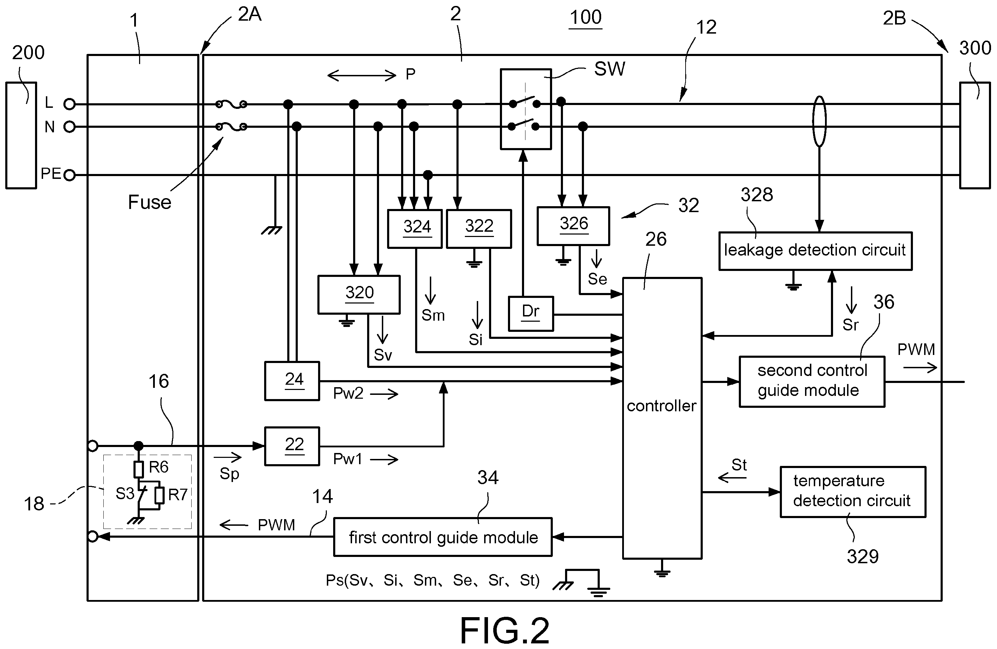

Please refer to FIG. 2, which shows a schematic diagram of an internal circuit of a charging device of the present disclosure applied to a first embodiment of V2X, and also refer to FIG. 1A and FIG. 1B. A first terminal of the charging device 100 is used to couple to an electric vehicle 200, and a second terminal thereof may be used to couple to an emergency power supply socket, a receiving electric vehicle, a mains power source, and other devices. When the coupled device is a mains power source and the mains power source is available, the mains power source may provide, for example but not limited to, an AC power source or a DC power source to the charging device 100. After the charging device 100 communicates with the electric vehicle 200, it provides a power source P to charge the electric vehicle 200 (this operation is referred to as a charging mode). In addition, the charging device 100 may also be applied to the discharge operation of V2X. Therefore, after coupling with the electric vehicle 200, the charging device 100 can adjust the operation mode to the V2X mode, and feed the power provided by the electric vehicle 200 to an emergency power supply socket, a receiving electric vehicle, a mains power source device 300 without power (hereinafter collectively referred to as load 300) to supply power to the load 300. In particular, V2X modes include, but are not limited to, vehicle-to-load V2L, vehicle-to-home V2H, vehicle-to-grid V2G, vehicle-to-vehicle V2V and other discharging modes, and for simplicity, they are collectively referred to as discharging modes in the following.

Furthermore, the charging device 100 includes a connection device 1 and a power device 2, and the connection device 1 may be a connector, a pluggable cable, etc. The connection device 1 includes a power wire 12, a control guide wire (or called control pilot wire) 14, and a connection guide wire (or called proximity pilot wire) 16, and a first terminal of the power wire 12, a first terminal of the control guide wire 14, and a first terminal of the connection guide wire 16 are coupled to an electric vehicle 200. The power wire 12 includes a live wire L, a neutral wire N, and a protecting earthing PE (i.e., a ground wire), and the control guide wire 14 is coupled to a trigger circuit 18. The trigger circuit 18 includes resistors R6, R7 connected in series, and a trigger switch S3 connected to the resistor in parallel. The function of the trigger circuit 18 is that when the connection device 1 is to be coupled to the electric vehicle 200, the user needs to press the trigger switch S3 to change the impedance on the connection guide wire 16. Therefore, the current flowing through the connection guide wire 16 and the changed impedance generate a change in the voltage on the connection guide wire 16 so that the electric vehicle 200 can confirm that the connection between the electric vehicle 200 and the connection device 1 is completed through the change of the voltage, and perform subsequent operations accordingly.

In one embodiment, the trigger circuit 18 is only a specific circuit required by certain electric vehicle brands and is not a necessary circuit. Therefore, the connection device 1 may configure the trigger circuit 18 according to the requirements of each electric vehicle brand or use only a single resistor to couple between the connection guide wire 16 and the ground wire PE. There is even only a single connection guide wire 16 on this path without other circuits, so it is not limited to FIG. 2. In addition, in one embodiment, the power wire 12 of FIG. 2 only shows a structure suitable for a single-phase AC power source, but the power wire 12 can actually be adjusted accordingly according to whether the power source P is a single-phase, three-phase AC power source or a DC power source, which will not be described in detail here.

A first terminal 2A of the power device 2 is coupled to a second terminal of the power wire 12, a second terminal of the control guide wire 14, and a second terminal of the connection guide wire 16, and a second terminal of the power device 2 is coupled to the mains power source, the load 300 or other devices. The power device 2 includes a conversion circuit 22, an auxiliary power circuit 24, and a controller 26. The controller 26 may be a single control chip or a control module composed of a plurality of control chips and a control circuit. The conversion circuit 22 is coupled to the connection guide wire 16 and the controller 26, and the conversion circuit 22 is used to convert a signal source Sp of the connection guide wire 16 into a first working power source Pw1. The auxiliary power circuit 24 is coupled to the live wire L, the neutral wire N, and the controller 26, and the auxiliary power circuit 24 is used to convert a power source P provided by the electric vehicle 200 to the power wire 12 into a second working power source Pw2.

Furthermore, when the power device 2 operates in the charging mode and the power source P is input to the second terminal 2B, the controller 26 is activated and can provide the power source P to the electric vehicle 200 to charge the electric vehicle 200. However, when there is no power source P input to the second terminal 2B, the controller 26 is disabled due to the lack of power source so that the power device 2 is inoperative without any control means. However, in general, if the power device 2 is to be able to change the operating mode to the discharging mode, it is necessary to use additional external power (such as but not limited to, external batteries, external power sources, etc.) to supply power to activate the controller 26. Therefore, the power device 2 will inevitably require an additional power supply structure, which will increase the additional cost and the additional device volume. The main purpose and effect of the present disclosure is that, when the controller 26 is disabled and the electric vehicle 200 is coupled to the connection device 1, the controller 26 is activated by using the power acquired by connecting the electric vehicle 200 to the connection device 1 so that subsequent operations can be performed after the controller 26 is activated. Furthermore, since such a power supply activation does not require the use of additional external power to supply power to the controller 26, it can achieve the effect of reducing the configuration cost of external power and reducing the size of the device.

Furthermore, when the controller 26 is disabled without a power source and the electric vehicle 200 is coupled to the connection device 1, the controller 26 is activated according to the first working power source Pw1. Furthermore, after the controller 26 is activated, the controller 26 can control the power device 2. Since there is no power source P input to the second terminal 2B, the controller 26 sets an operating mode to be current executed to the discharging mode, and performs subsequent operations accordingly. When the controller 26 is subsequently operated in the discharging mode and receives the second working power source Pw2, it means that the electric vehicle 200 has provided the power source P to the power wire 12 so that the auxiliary power circuit 24 can convert the power source P into the second working power source Pw2.

In particular, the controller 26 is mainly activated by receiving the first working power source Pw1, and then changes the impedance on the connection guide wire 16 to notify the electric vehicle 200 to adjust to the discharging mode. Specifically, since the current flowing through the connection guide wire 16 and the changed impedance may cause a change in the voltage on the connection guide wire 16, the controller 26 can adjust the voltage on the connection guide wire 16 to a specific voltage by, for example but not limited to, adjusting the self-drawn load so that the electric vehicle 200 can confirm that the current operating mode is the discharging mode according to the specific voltage.

Since the first working power source Pw1 is only temporary emergency power, it can generally only meet the minimum requirement of the controller 26 and is insufficient to meet requirements of complete operation of the controller 26. On the other hand, since the energy of the second working power source Pw2 is sufficient and its supply source is relatively stable, it can meet requirements of complete operation of the controller 26. Therefore, the controller 26 changes the power acquisition source from the first working power source Pw1 to the second working power source Pw2 so as to switch the power source to the second working power source Pw2 with a more stable power supply to maintain the operation stability of the controller 26. In addition, the circuit structure and operation steps of the present disclosure other than the circuit features and operations described above may be adaptively adjusted under the specifications of the electric vehicle charging technology field, and the preferred circuit structure and operation manner of the present disclosure will be further described later, which will not be described in detail here. Therefore, as long as the charging device 100 applies the circuit structure and operation manner described in FIG. 2 of the present disclosure, it should fall within the scope of the present disclosure.

Please refer to FIG. 2 again, the power device 2 further includes a switch SW, a detection module 32, a first control guide module 34, and a second control guide module 36. The switch SW is connected to the power wire 12 in series, and coupled to the controller 26. In one embodiment, the switch SW may be, for example but not limited to, a relay or a semiconductor component. The relay is a preferred implementation, but the present disclosure is not limited thereto. The switch SW is mainly coupled to a power transmission path of the live wire L and a power transmission path of the neutral wire N, and when the switch SW is turned on or turned off, the two power transmission paths may be connected or disconnected simultaneously. Since the ground wire PE is the common grounding point of all components, it is not necessary to use the switch SW to control the path to be connected or disconnected.

Furthermore, when the controller 26 is disabled, since the controller 26 is out of power and cannot control the switch SW, the switch SW is in a turned-off state. Furthermore, when the controller 26 receives the first working power source Pw1, since the controller 26 has not yet completed the communication with the electric vehicle 200 and there is no power source P, the switch SW remains in the turned-off state. Afterward, when the power acquisition source is changed to the second working power source Pw2, it means that the controller 26 has completed the communication with the electric vehicle 200, and the power source P is provided to the power wire 12. Therefore, the controller 26 controls the switch SW to be turned on so as to transmit the power source P to the load 300 through the switch SW.

The detection module 32 is coupled to the power wire 12 and the controller 26, and when the power source P is transmitted to the power wire 12, the power source P is detected to generate a power parameter Ps. The controller 26 may selectively turn on or turn off the switch SW according to the corresponding power parameter Ps, and when the power parameter Ps is abnormal, the controller 26 turns off the switch SW to disconnect the power wire 12 to prevent the power source P from being transmitted. On the contrary, when the power parameter Ps is normal, the controller 26 turns on the switch SW to short circuit the power wire 12 so that the power wire 12 is enabled to transmit the power source P by turning on the switch SW. Please refer to FIG. 2 again, the detection module 32 includes a plurality of detection circuits, which may include, for example but not limited to, a voltage detection circuit 320, a current detection circuit 322, a ground detection circuit 324, a welding detection circuit 326, a leakage detection circuit 328, and a temperature detection circuit 329. The temperature detection circuit 329 is coupled to the controller 26, and the voltage detection circuit 320, the current detection circuit 322, the ground detection circuit 324, the welding detection circuit 326, and the leakage detection circuit 328 are respectively coupled to the power wire 12 and the controller 26.

The voltage detection circuit 320 detects a voltage from the first terminal 2A to the switch SW to generate a voltage signal Sv, and the controller 26 determines whether a voltage on the power wire 12 is normal according to the voltage signal Sv. The current detection circuit 322 detects a current from the first terminal 2A to the switch SW to generate a current signal Si. The ground detection circuit 324 detects a ground impedance from the first terminal 2A to the switch SW to generate an impedance signal Sm so that the controller 26 can determine whether the grounding of the power device 2 is normal according to the impedance signal Sm. The welding detection circuit 326 is coupled to the power wire 12 between the switch SW and the second terminal 2B, and detects whether the switch SW is welded to generate a welding signal Se so that the controller 26 can determine whether the switch SW can be correctly disconnected according to the welding signal Se. The leakage detection circuit 328 is coupled to the power wire 12 between the switch SW and the second terminal 2B, and detects whether the power wire 12 has leakage current and provides a leakage signal Sr so that the controller 26 determines whether the power wire 12 has leakage current according to the leakage signal Sr. The temperature detection circuit 329 detects an ambient temperature in the power device 2 and provides a temperature signal St, and the controller 26 determines whether the ambient temperature in the power device 2 is too high according to the temperature signal St.

Therefore, the power parameter Ps may include the voltage signal Sv, the current signal Si, the impedance signal Sm, the welding signal Se, the leakage signal Sr, and the temperature signal St, and the controller 26 determines whether to control the switch SW to be turned on or turned off according to the above-mentioned signals. Furthermore, the controller 26 may determine whether the power source P on the power wire 12 has overvoltage/undervoltage (OV/UV), overcurrent (OC), grounding abnormality, contact welding, and leakage current according to the voltage signal Sv, the current signal Si, the impedance signal Sm, the welding signal Se, and the leakage signal Sr. Furthermore, the controller 26 may determine whether the ambient temperature in the power device 2 is over temperature (OT) according to the temperature signal St.

When the above-mentioned situation does not occur, the controller 26 can control the switch SW to be turned on to transmit the power source P to the power wire 12 after completing a handshake communication with the electric vehicle 200 and the power acquisition source is the second working power source Pw2. On the contrary, in addition to the contact welding, the controller 26 can control the switch SW to be turned off so that the power wire 12 is disconnected and the power source P cannot be transmitted. Furthermore, when contact welding occurs, since the switch SW cannot be disconnected smoothly, the controller 26 can, for example but not limited to, control the handshake communication between the control guide wire 14 and the electric vehicle 200 to inform the electric vehicle 200 to stop providing the power source P, or change the impedance on the connection guide wire 16 to make the electric vehicle 200 determine that the connection is abnormal and interrupt the output of the power source P, etc. to stop supplying the power source P to the power wire 12.

Please refer to FIG. 2 again, the first control guide module 34 is coupled to the control guide wire 14 and the controller 26. The controller 26 may transmit a pulse-width modulation (PWM) signal PWM through the first control guide module 34 to communicate with the electric vehicle 200 by the handshake communication to confirm the magnitude of the discharge current. Meanwhile, the controller 26 can confirm the state of the electric vehicle 200 through the voltage level of the pulse-width modulation signal PWM. Therefore, the power supply capacity of the electric vehicle 200 can be acquired, and the upper limit of the discharge current and other parameters may be set according to the power supply capacity so as to notify the electric vehicle 200 to provide the power source P. On the other hand, the second control guide module 36 is coupled to the controller 26 and the second terminal 2B. When the load 300 can also communicate with the power device 2 through the handshake communication (for example but not limited to, the load 300 is a power-receiving terminal of the electric vehicle 200), the controller 26 can also transmit the pulse-width modulation signal PWM to the load 300 through the second control guide module 36 to confirm the magnitude of the charge current. Furthermore, after the three parties have completed the communication, the electric vehicle 200 is notified to provide power source P to the power wire 12. In one embodiment, the switch SW can be driven to be turned on or turned off by, for example but not limited to, a driving circuit Dr. However, if the switch SW does not need to be driven by the driving circuit Dr, this component may be omitted.

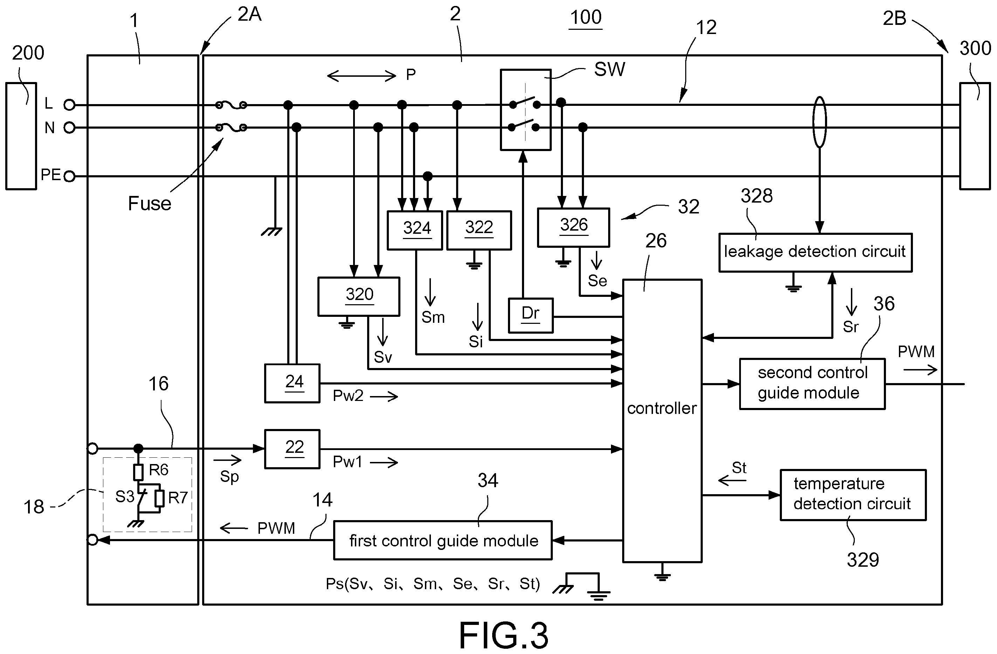

Please refer to FIG. 3, which shows a schematic diagram of the internal circuit of the charging device of the present disclosure applied to a second embodiment of V2X, and also refer to FIG. 2. The circuit structure is similar to that of FIG. 2, except that the conversion circuit 22 and the auxiliary power circuit 24 of FIG. 3 are respectively coupled to the controller 26, and the conversion circuit 22 of FIG. 2 is coupled to the auxiliary power circuit 24 and the controller 26. Therefore, the controller 26 receives the first working power source Pw1 through an independent path from the conversion circuit 22 to the controller 26, and receives the second working power source Pw2 through an independent path from the auxiliary power circuit 24 to the controller 26. Therefore, when the controller 26 operates in the discharging mode and receives the second working power source Pw2, the controller 26 changes the power acquisition source from the first working power source Pw1 to the second working power source Pw2. Furthermore, the pin receiving the first working power source Pw1 may be disabled, and the conversion circuit 22 may be controlled to standby or be disabled to reduce energy consumption. Alternatively, the controller 26 may also continuously enable the pin receiving the first working power source Pw1 and adjust the voltage of the connection guide wire 16 to a specific voltage by adjusting its own draw amount so that the electric vehicle 200 can continuously confirm that the operating mode is the discharging mode. In addition, the conversion circuit 22 may also be a bidirectional converter. In addition to controlling the conversion circuit 22 to adjust the voltage of the connection guide wire 16 to the specific voltage, the controller 26 can also adjust the voltage to other voltages to change the current operating mode (for example but not limited to, standby mode, fault mode, etc.)

In addition, please refer to FIG. 2 and FIG. 3, the conversion circuit 22 may be a step-up (boost) converter, and the controller 26 controls the step-up converter to standby or be disabled when the power acquisition source is changed to the second working power source Pw2. Furthermore, after the connection device 1 is plugged into the electric vehicle 200, the power device 2 can use the voltage of the signal source Sp (i.e., the voltage between the connection guide wire 16 and the ground wire, which is, for example but not limited to, 0.5V to 1.5V) to step up the voltage (for example but not limited to, 3.3V or 5V) to provide a suitable first working power source Pw1 to wake up the controller 26. When the controller 26 is awakened, the voltage on the connection guide wire 16 can be changed to the specific voltage to notify the electric vehicle 200 to adjust to the discharging mode. In one embodiment, the conversion circuit 22 is not limited to being implemented as a step-up converter. Specifically, since the voltage of the signal source Sp is generally low in the application design of the charging device 100, it is difficult to meet the requirement of waking up the controller 26 (for example but not limited to, 3.3V). However, if the voltage of the signal source Sp is higher than the requirement of waking up the controller 26 (for example but not limited to, 9V), the conversion circuit 22 may also be a step-down (buck) converter. Therefore, the conversion circuit 22 is mainly designed based on whether the voltage of the signal source Sp can meet the requirement of waking up the controller 26, and it can be any type of converter such as a step-up converter or a step-down converter.

In addition, since the present disclosure is characterized in that, in the discharging mode, the controller 26 can be awakened and can communicate with the electric vehicle 200 by the handshake communication to confirm the magnitude of the discharge current of the electric vehicle 200, the magnitude of the discharge current of the electric vehicle 200 can be adjusted by the user. For example but not limited to, the user can make adjustments through buttons, Bluetooth or APP, and in addition to the original fuse, the power wire 12 can also use multiple types of detection modules 32 as described above to perform over-current protection for different discharge currents. In one embodiment, the circuits, coupling relationships and operating manners not illustrated in FIG. 3 may be referred to in conjunction with FIG. 2 and will not be described in detail herein.

In addition, in one embodiment, the reason why the control guide wire 14 in FIG. 2 and FIG. 3 does not include the conversion circuit 22 is that the high voltage level of the pulse-width modulation signal PWM is generally around 5V. Therefore, if the controller 26 requires 3.3V for the working power source, it is not necessary to use the conversion circuit 22 to step up the 5V, and instead, an optional additional voltage regulator (such as but not limited to, a linear regulator) may be configured to stabilize the working power source received by the controller 26 at 3.3V. Therefore, one of the features and effects of the present disclosure is that, the controller can use the voltage of the signal source Sp (i.e., the voltage across the connection guide wire 16 and the ground wire) to step up the voltage to achieve a self-wake-up function, and there is no need to place additional batteries in the V2X product, nor is there any need to pre-charge the V2X product before operation so that a self-starting effect can be achieved.

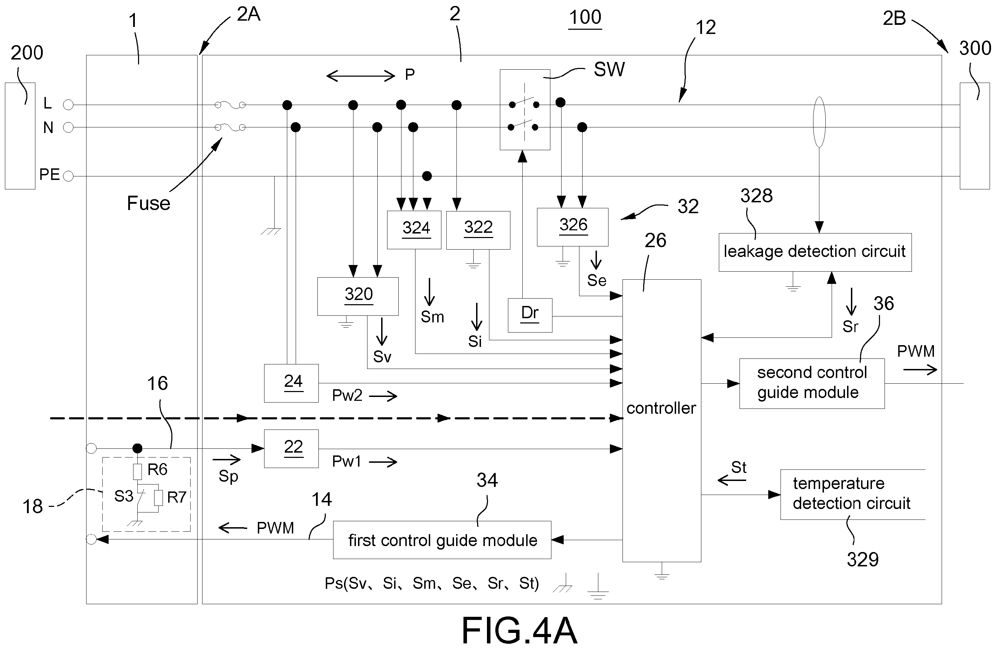

Please refer to FIG. 4A to FIG. 4D, which shows schematic diagrams of four operation steps of the charging device of the present disclosure applied to V2X, and also refer to FIG. 2 and FIG. 3. In particular, FIG. 4A to FIG. 4D are further illustrations of the preferred operating manner of the present disclosure, but are not the only operating manner. Therefore, those skilled in the art may selectively combine the operating steps disclosed in FIG. 4A to FIG. 4D and any other detailed operating steps that meet the specifications to implement the operation of the discharging mode. Therefore, the operation of the discharging mode does not necessarily include all the steps of the present disclosure and can be implemented according to their sequence.

In FIG. 4A, when the connection device 1 is not plugged into the electric vehicle 200, the controller 26 is disabled due to the lack of power source, and the controller 26 cannot control the switch SW to be turned on so that the power transmission path is disconnected. When the connection device 1 is plugged into the electric vehicle 200, the electric vehicle 200 will provide the signal source Sp to the connection guide wire 16 regardless of whether the user presses the trigger switch S3. Furthermore, the signal source Sp is usually divided by the resistors R6, R7 to allow the electric vehicle 200 to confirm whether the connection with the connection device 1 is completed. In addition to the above-mentioned functions, the present disclosure can convert the voltage of the signal source Sp into the first working power source Pw1 suitable for the operation of the controller 26 through the conversion circuit 22 so that the controller 26 is restored from the disabled state to the enabled state to activate operation.

When the controller 26 activates to operate, the controller 26 can change the voltage on the connection guide wire 16 to a specific voltage to notify the electric vehicle 200 to adjust to the discharging mode. The specific adjustment manner is that the controller 26 adjusts its own draw amount to adjust the voltage on the connection guide wire 16 to the specific voltage. Alternatively, the resistors R6, R7 may be adjustable resistors, and the controller 26 may adjust the impedance of the resistors R6, R7 to change the voltage on the connection guide wire 16 to the specific voltage. In one embodiment, the controller 26 has multiple ways to change the voltage on the connection guide wire 16 to the specific voltage, which will not be described in detail here.

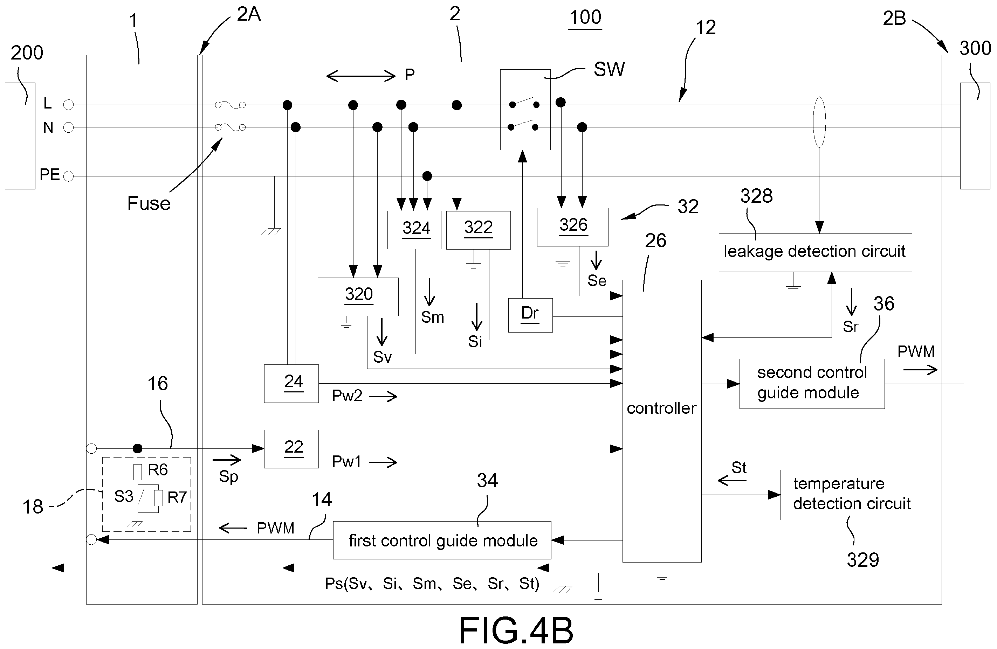

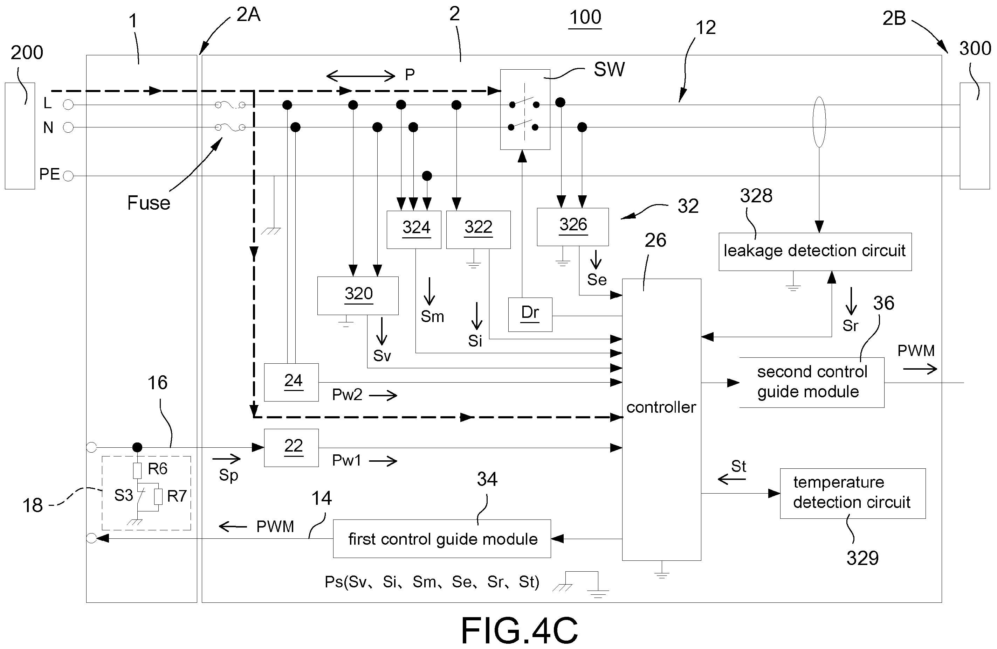

In FIG. 4B, after the controller 26 has notified the electric vehicle 200 to adjust to the discharging mode, the controller 26 can provide a pulse-width modulation (PWM) signal PWM to the electric vehicle 200 through the control guide wire 14 so that the controller 26 acquires the discharge current of the electric vehicle 200 and the status of the electric vehicle 200 through handshake communication with the electric vehicle 200. Therefore, the power supply capacity of the electric vehicle 200 can be acquired, and parameters such as the upper limit of the discharge current may be set according to the power supply capacity. In FIG. 4C, the controller 26 has completed the handshake communication with the electric vehicle 200, and has acquired the power supply capacity of the electric vehicle 200 and set the upper limit of the discharge current and other parameters. Therefore, the controller 26 can notify the electric vehicle 200 to activate discharging to the power wire 12. After the electric vehicle provides the power source P to the power wire 12, the auxiliary power circuit 24 converts the power source P on the power wire 12 into the working power required by the controller 26 (i.e., the second working power source Pw2).

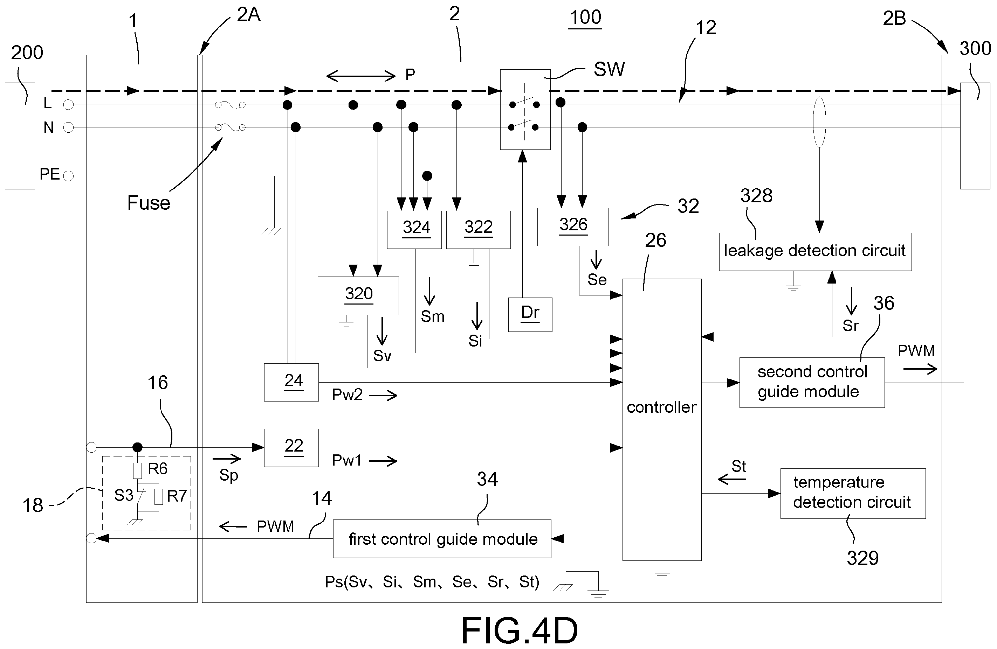

Afterward, when the controller 26 receives the second working power source Pw2, the controller 26 changes the main power source from the conversion circuit 22 to the auxiliary power circuit 24. Furthermore, the controller 26 may select to put the conversion circuit 22 into standby mode or disable the conversion circuit 22 to save power consumption. Alternatively, the controller 26 may adjust the voltage of the connection guide wire 16 to a specific voltage or to another voltage to change the current operating mode (such as but not limited to standby mode, fault mode, etc.), and inform the electric vehicle 200 accordingly. In particular, since the controller 26 has not confirmed whether the quality of the power source P meets the specification (which may be detected by the detection module 32), the controller 26 has not yet controlled the switch SW to be turned on so that the power source P cannot be provided to the rear-end load 300. In FIG. 4D, when the controller 26 confirms that the quality of the power source P meets the specification through the detection module 32, the controller 26 controls the switch SW to be turned on to provide the power source P from the power wire 12 to the rear-end load 300 to supply power to the rear-end load 300. Therefore, the V2X activation operation can be completed by the steps of FIG. 4A to FIG. 4D.

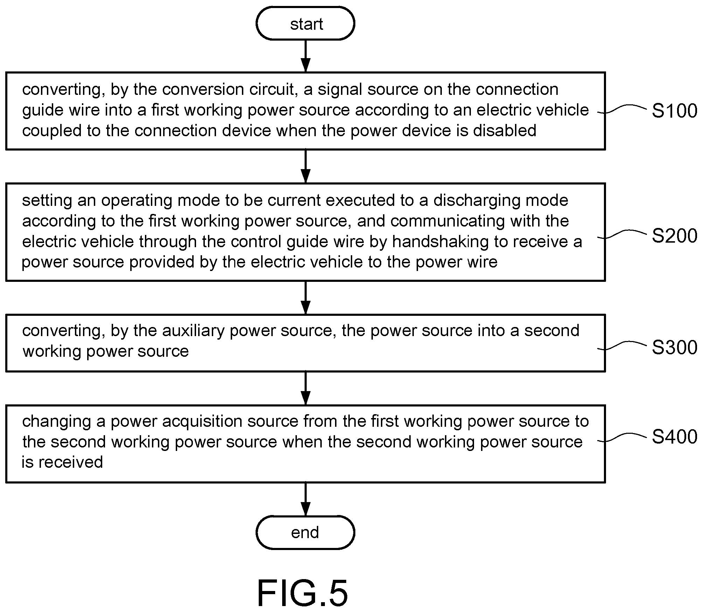

Please refer to FIG. 5, which shows a flowchart of a method of operating the charging device according to the present disclosure, and also refer to FIG. 2 to FIG. 4D. The operating method of FIG. 5 is mainly used for a charging device 100 for charging and discharging an electric vehicle 200, and the charging device 100 includes a connection device 1 and a power device 2. The connection device 1 includes a power wire 12, a control guide wire 14, and a connection guide wire 16, and the power device 2 includes a switch SW, a conversion circuit 22, and an auxiliary power circuit 24. The method of operating the charging device 100 is mainly to wake up the controller 26 of the power device 2 in the discharging mode so as to identify and adjust the discharge current provided by the electric vehicle 200. Furthermore, when the electric vehicle 200 is discharging, the functions of ground protection, overcurrent protection, overvoltage protection, and leakage current detection protection can be provided. Specifically, the method of charging the charging device 100 includes steps of: converting, by the conversion circuit, a signal source on the connection guide wire into a first working power source according to an electric vehicle coupled to the connection device when the power device is disabled (S100). In particular, the operation of step S100 may be referred to FIG. 4A, and will not be described in detail herein.

Afterward, setting an operating mode to be current executed to a discharging mode according to the first working power source, and communicating with the electric vehicle through the control guide wire by handshaking to receive a power source provided by the electric vehicle to the power wire (S200), and converting, by the auxiliary power circuit, the power source into a second working power source (S300). In particular, the operations of step S200 and step S300 may be described with reference to FIG. 4B and FIG. 4C, and will not be described in detail herein. Finally, changing a power acquisition source from the first working power source to the second working power source when the second working power source is received (S400). The operation of step S400 may be referred to FIG. 4D, and will not be described in detail herein. In one embodiment, the detailed operation process not illustrated in FIG. 5 may be referred to in conjunction with FIG. 2 to FIG. 4D, and will not be described in detail herein.

## Claims

1. A charging device (100), **characterized in that** comprising a connection device (1), the connection device (1) comprising a power wire (12), a control guide wire (14), and a connection guide wire (16), and a first terminal of the power wire (12), a first terminal of the control guide wire (14), and a first terminal of the connection guide wire (16) coupled to an electric vehicle (200), and the charging device (100) further comprising:
a power device (2) coupled to a second terminal of the power wire (12), a second terminal of the control guide wire (14), and a second terminal of the connection guide wire (16), and the power device (2) comprising:
a conversion circuit (22) coupled to the connection guide wire (16), and configured to convert a signal source (Sp) of the connection guide wire (16) into a first working power source (Pw1),
an auxiliary power circuit (24) coupled to the power wire (12), and configured to convert a power source (P) provided by the electric vehicle (200) to the power wire (12) into a second working power source (Pw2), and
a controller (26) coupled to the conversion circuit (22) and the auxiliary power circuit (24),
wherein when the controller (26) is disabled and the electric vehicle (200) is coupled to the connection device (1), the controller (26) is activated according to the first working power source (Pw1), and configured to set an operating mode to be current executed to a discharging mode; when the controller (26) operates in the discharging mode and receives the second working power source (Pw2), the controller (26) is configured to change a power acquisition source from the first working power source (Pw1) to the second working power source (Pw2).

2. The charging device (100) as claimed in claim 1, wherein after the controller (26) receives the first working power source (Pw1), a voltage on the connection guide wire (16) is changed to a specific voltage so as to notify the electric vehicle (200) to adjust to a discharging mode.

3. The charging device (100) as claimed in claim 2, wherein after the discharging mode is adjusted, the magnitude of a discharge current of the electric vehicle (200) is confirmed by handshake communicating with the electric vehicle (200) through the control guide wire (14), and the electric vehicle (200) is notified to provide the power source (P) according to the discharge current.

4. The charging device (100) as claimed in claim 1, wherein the power device (2) further comprises:
a switch (SW) connected to the power wire (12) in series and coupled to the controller (26),
wherein when the controller (26) is disabled, the switch (SW) is in a turned-off state, and the controller (26) is configured to control the switch (SW) to be turned on when the power acquisition source is changed to the second working power source (Pw2) so as to transmit the power source (P) to a load through the switch (SW).

5. The charging device (100) as claimed in claim 4, wherein the power device (2) further comprises:
a detection module (32) coupled to the power wire (12) and the controller (26), and configured to detect the power source (P) to generate a power parameter (Ps),
wherein the controller (26) is configured to control the switch (SW) to be turned on or turned off according to the power parameter (Ps).

6. The charging device (100) as claimed in claim 1, wherein the controller (26) is configured to control the conversion circuit (22) to standby or be disabled when the power acquisition source is changed to the second working power source (Pw2).

7. A method of operating a charging device (100), the charging device (100) comprising a connection device (1) and a power device (2); the connection device (1) comprising a power wire (12), a control guide wire (14), and a connection guide wire (16); the power device (2) comprising a switch (SW), a conversion circuit (22), and an auxiliary power circuit (24); **characterized in that** the method comprising steps of:
converting, by the conversion circuit (22), a signal source (Sp) on the connection guide wire (16) into a first working power source (Pw1) according to an electric vehicle (200) coupled to the connection device (1) when the power device (2) is disabled,
setting an operating mode to be current executed to a discharging mode according to the first working power source (Pw1), and communicating with the electric vehicle (200) through the control guide wire (14) by handshaking to receive a power source (P) provided by the electric vehicle (200) to the power wire (12),
converting, by the auxiliary power circuit (24), the power source (P) into a second working power source (Pw2), and
changing a power acquisition source from the first working power source (Pw1) to the second working power source (Pw2) when the second working power source (Pw2) is received.

8. The method of operating the charging device (100) as claimed in claim 7, further comprising steps of:
after receiving the first working power source (Pw1) and activating the power device (2), a voltage on the connection guide wire (16) is changed to a specific voltage, and
notifying the electric vehicle (200) that the operating mode to be current executed is the discharging mode according to the specific voltage.

9. The method of operating the charging device (100) as claimed in claim 7, further comprising steps of:
confirming the magnitude of a discharge current of the electric vehicle (200) by handshake communicating with the electric vehicle (200) through the control guide wire (14) in the discharging mode, and
notifying the electric vehicle (200) to provide the power source (P) according to the discharge current.

10. The method of operating the charging device (100) as claimed in claim 7, wherein the charging device (100) further comprises a switch (SW) connected to the power wire (12) in series, and the method further comprises steps of:
controlling the switch (SW) to be turned on when the power acquisition source is changed to the second working power source (Pw2), and
transmitting the power source (P) to a load through the switch (SW).

11. The method of operating the charging device (100) as claimed in claim 7, further comprising steps of:
detecting, by a detection module (32), the power source (P) to receive a power parameter (Ps) generated by the detection module (32), and
controlling the switch (SW) to be turned on or turned off according to the power parameter (Ps).

12. The method of operating the charging device (100) as claimed in claim 7, further comprising a step of:
controlling the conversion circuit (22) to be disabled when the power acquisition source is changed to the second working power source (Pw2).
